# FASCICULE DE BREVET EUROPEEN

(11) **EP 0 834 440 B1**
(45) Date de publication et mention de la délivrance du brevet: **27.12.2000**
(21) Numéro de dépôt: 97870148.0
(22) Date de dépôt: 30.09.1997
(51) Int. Cl.: B62D 13/04, B62D 7/08, B60G 3/14

(54) **Remorques**
Anhänger
Trailers

(30) Priorité: 02.10.1996 DE 29617052 U
(43) Date de publication de la demande: 08.04.1998
(73) Titulaire: Faymonville, Yves, 4761 Rocherath 90 (BE); Faymonville, Alain, 4761 Rocherath 118 (BE)
(72) Inventeur: Faymonville, Yves, 4761 Rocherath 90 (BE); Faymonville, Alain, 4761 Rocherath 118 (BE)
(74) Mandataire: Van Malderen, Joelle

(56) Documents cités:
- EP-A- 0 015 015
- US-E- R E29 849
- D1: Goldhofer Fahrzeugwerke GmbH & Co. (Catalogue), 09/96, "Satteltiefladeanhänger mit gelenkten Achsen STN-L/STZ-L"
- D2: Goldhofer Fahrzeugwerke GmbH & Co. (Catalogue), 01/95, "Technisches Datenblatt/.../Spécifications techniques STZ-V/STZ-VL"

## Description

### Objet de l'invention

La présente invention est relative à des perfectionnements apportés à des remorques de transport routier, en particulier des remorques à essieux multiples pour le transport routier lourd, notamment les transports dits exceptionnels. Une remorque selon le préambule de la revendication 1 est connue du catalogue "Satteltiefladeanhänger mit gelenkten Achsen, STN-L/STZ-L" de Goldhofer Fahrzeugwerke, 9.96. Les demi-essieux en porte-à-faux sont connus en soi.

### Arrière-plan technologique

Des réglementations relativement complexes s'appliquant aux remorques de transport routier ont été introduites dans différents pays.

Ces dispositions réglementaires s'appliquent notamment à des considérations de sécurité liées à la charge maximale autorisée, mais également à des mesures visant à éviter la dégradation des routes et de leur revêtement.

Les considérations de sécurité routière sont liées plus spécifiquement aux capacités de freinage et à la résistance des pneumatiques ainsi que des considérations relatives à la détérioration éventuelle des routes.

Les évolutions récentes de la technique en matière de freinage et de pneumatiques rendent cependant obsolètes certaines de ces dispositions, en ce sens que l'on dispose actuellement de capacités de freinage et de qualités de pneumatiques qui permettraient d'accroître la charge admise sans risque pour la sécurité.

Il reste cependant un facteur limitatif lié à la configuration géométrique des routes, qui ne permet pas, sans risque au stade actuel, d'accroître la charge utile autorisée des remorques.

En fait, il s'agit de routes qui ne sont pas totalement planes et horizontales transversalement, par exemple des routes bombées, en devers ou à accotements abaissés. Dans le cas d'un essieu rigide, l'absence de planéité et d'horizontalité transversale peut entraîner des risques de détérioration de la route par suite d'une répartition inégale des efforts sur la route, et peut également causer un déséquilibre des efforts appliqués sur les roues.

Une autre difficulté à laquelle on se heurte est la nécessité de concilier une répartition adéquate des charges appliquées aux roues avec la nécessité d'équiper la remorque d'un système directionnel des roues pour faciliter la manoeuvrabilité et la tenue de route et aussi pour éviter l'usure prématurée des revêtements routiers, en particulier, des revêtements de type hydrocarboné.

A cet égard, deux documents peuvent être cités qui visent à améliorer la manoeuvrabilité d'une remorque.

Le document DE-1-0015015 décrit une remorque à essieu rigide, équipée d'un système mécanique de direction forcée des roues. Ce système ést utilisé pour commander le changement de direction des roues, lesquelles sont montées sur un essieu unique de la remorque.

Le brevet US RE29849 décrit un système de suspension à demi-essieux comprenant un système directionnel des roues à essieux-suiveurs qui permet un pivotement automatique des roues lors du virage.

### Buts de l'invention

La présente invention vise à accroître les possibilités de charge autorisée d'une remorque sans porter préjudice à sa manoeuvrabilité en respectant les impératifs de sécurité et en limitant la dégradation des routes et notamment des revêtements routiers.

### Eléments caractéristiques de la présente invention

Selon l'invention, on propose une remorque selon la revendication 1.

Afin de réduire l'encombrement d'un système combinant le montage à deux demi-essieux avec un système directionnel des roues selon l'invention, en particulier dans le cas notamment de transports dits exceptionnels (transport d'engins de terrassement ou autre de grand gabarit), le montage à l'aide de demi-essieux à fusée s'est révélé particulièrement avantageux.

D'autres détails et caractéristiques de l'invention apparaîtront à la lecture de la description d'une forme d'exécution préférée de l'invention qui suit, et en référence aux revendications.

### Brève description des dessins

L'invention sera décrite plus en détails en référence aux dessins annexés, qui sont donnés à titre d'illustration sans caractère limitatif d'une forme d'exécution préférée de l'invention.

Dans les dessins :
- la figure 1: représente une vue d'arrière d'un train de roues d'une remorque;

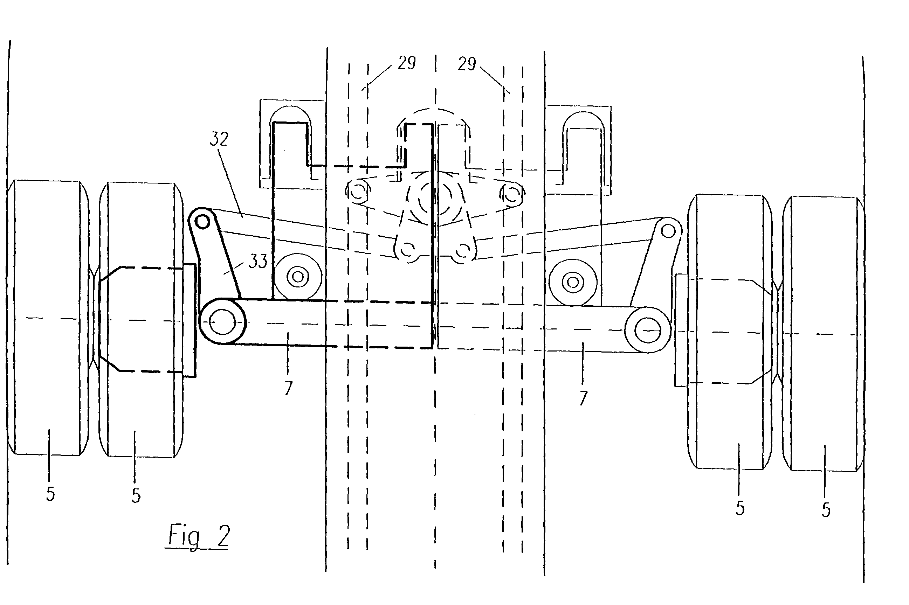

- la figure 2: représente une vue de dessus correspondant à la figure 1;

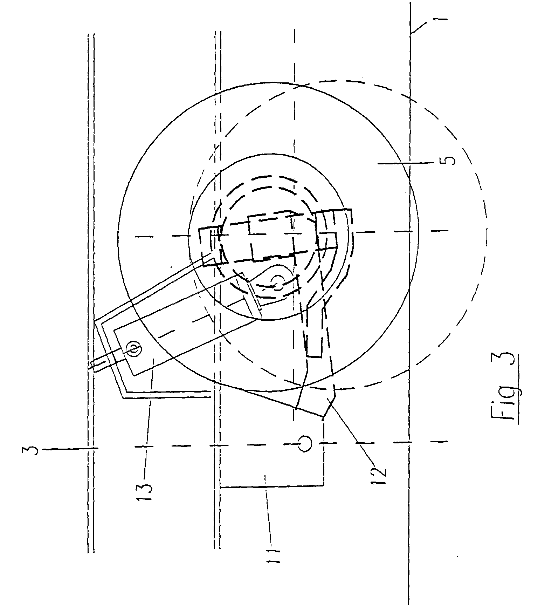

- la figure 3: est une vue de côté (profil) correspondant aux figures 1 et 2;

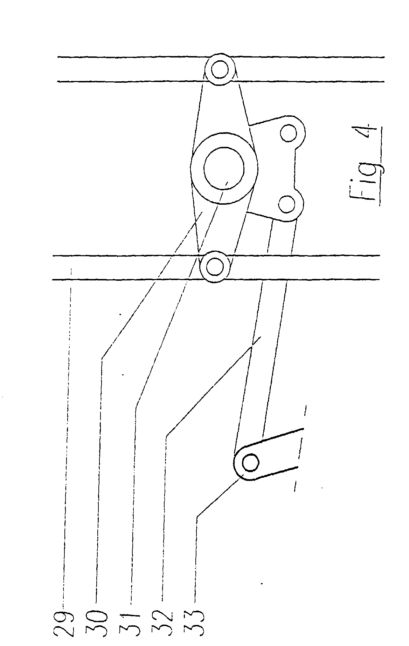

- la figure 4: est une représentation schématique d'un système de direction classique;

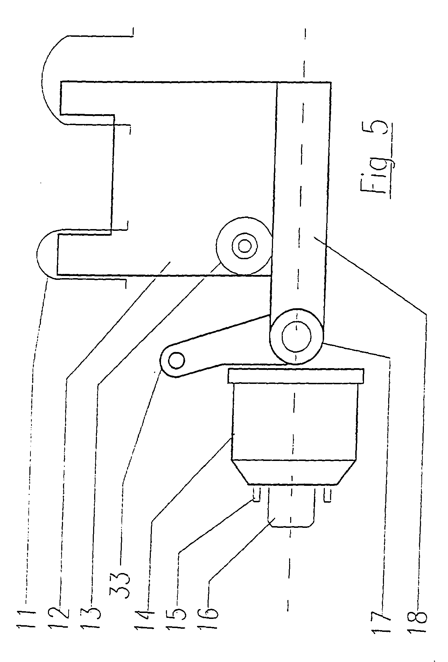

- la figure 5: représente une vue uniquement de l'élément formant le demi-essieu dans une vue correspondant à la figure 2;

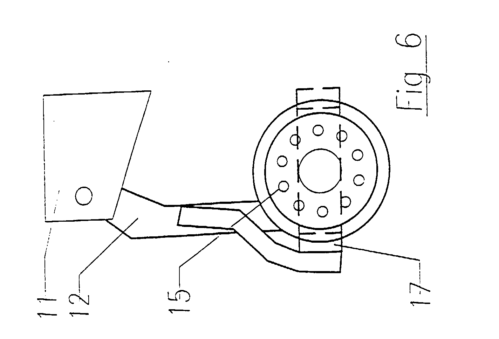

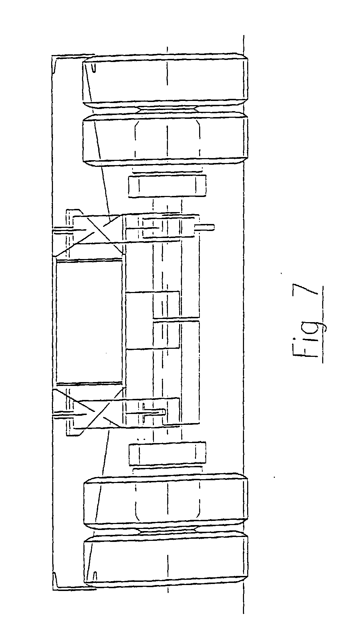

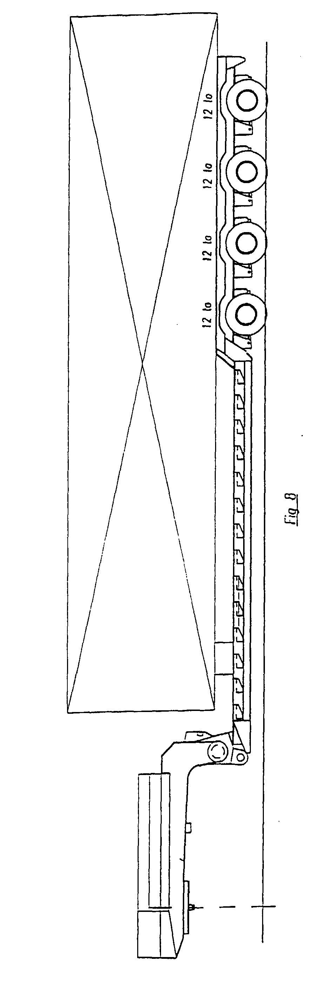

- la figure 6: est une vue des mêmes éléments que ceux de la figure 5 mais selon une vue de côté (profil) ;

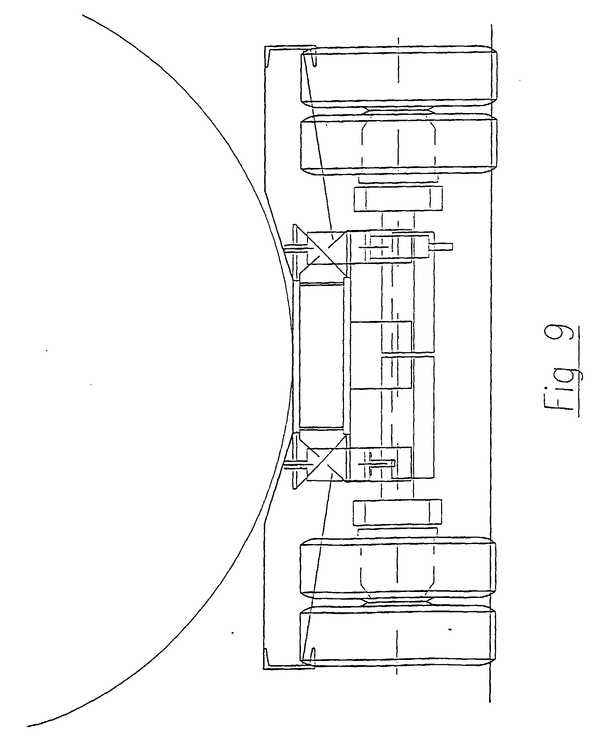

- Les figures 7 et 8: sont des vues schématiques, respectivement d'arrière et de profil, d'une semi-remorque comportant 4 lignes de roues équipée d'un châssis pour recevoir une charge totale de quatre fois 12 tonnes, chaque paire de demi-essieux supportant 12 tonnes;
- Les figures 9 et 10: sont des vues similaires à celles des figures 7 et 8 d'une semi-remorque, supportant dans les mêmes conditions un citerne à section cylindrique et;
- Les figures 11 et 12: sont des vues similaires aux figures 7 à 10 d'une semi-remorque, supportant un engin de génie civil tel qu'une pelleteuse ou excavatrice.

### Description d'une forme d'exécution préférée de l'invention

Dans les figures, on a indiqué par le repère 1 le niveau d'un sol qui présente un dénivelé pour les roues de droite par rapport aux roues de gauche.

Dans la conception classique d'un essieu rigide, c'est-à-dire d'un seul tenant, ceci résulte en une inclinaison axiale de l'essieu parallèlement au sol.

Selon l'invention cependant, on n'utilise pas un essieu d'un seul tenant mais on a recours à deux "demi-essieux" 7 indépendants fixés au châssis.

Dans les dessins, le châssis est identifié par le repère 3 et les roues en ligne portent le repère 5.

Dans les différentes figures, on a indiqué par des traits plus gras, pour le côté gauche, un demi-essieu 7. Il comporte la partie identifiée par le repère 11, qui constitue le support d'un demi-essieu, qui est fixé au châssis 3 et qui se prolonge par un bras de suspension 12.

De manière classique, les roues 5 sont équipées d'un tambour de frein 14 et elles comportent des goujons de roue 15, un moyeu 16, une fusée 17 constituant le point de rotation et un corps d'essieu 18 supporté par le bras de suspension 12.

Comparé aux essieux dits pendulaires, assez largement utilisés, notamment dans les transports dits exceptionnels, les demi-essieux à fusée offrent l'avantage d'un encombrement réduit et de comporter moins de pièces. L'encombrement réduit pour une garde au sol déterminée permet de charger des engins de hauteur importante tout en permettant le passage sous des ponts.

Chaque demi-essieu 7 est donc relié au châssis par un bras de suspension 12 s'étendant dans le sens longitudinal par rapport au point de fixation du support 11 au châssis 3. En d'autres mots, les demi-essieux 7 sont montés chacun indépendamment l'un de l'autre et en porte-à-faux par rapport au point de fixation du bras de suspension au châssis.

Les vérins hydrauliques ou pneumatiques de suspension 13 classiques équipent chaque demi-essieux et fonctionnent bien entendu indépendamment les uns des autres pour le demi-essieu gauche et le demi-essieu droit.

Pour assurer une meilleure maniabilité et une meilleure tenue de route d'une remorque du type à demi-essieux selon l'invention tout en évitant de détériorer les revêtements routiers, selon une caractéristique essentielle de l'invention, il est prévu un dispositif directionnel constitué, dans la forme d'exécution illustrée, d'une barre de liaison 29, d'un triangle de direction 30, d'un pivot 31 ainsi que de barres bi-articulées 32 agissant sur des leviers de direction 33.

Les barres de liaison 29 sont commandées par vérin, de manière à permettre le pivotement des roues.

Des moyens équivalents, connus en soi, peuvent notamment être utilisés pour qu'une seule barre de liaison commandée par un seul vérin travaillant en traction ou en compression, permette de faire pivoter les roues à partir d'un point central.

Cette forme d'exécution qui n'est pas représentée relève cependant également du concept inventif de l'invention.

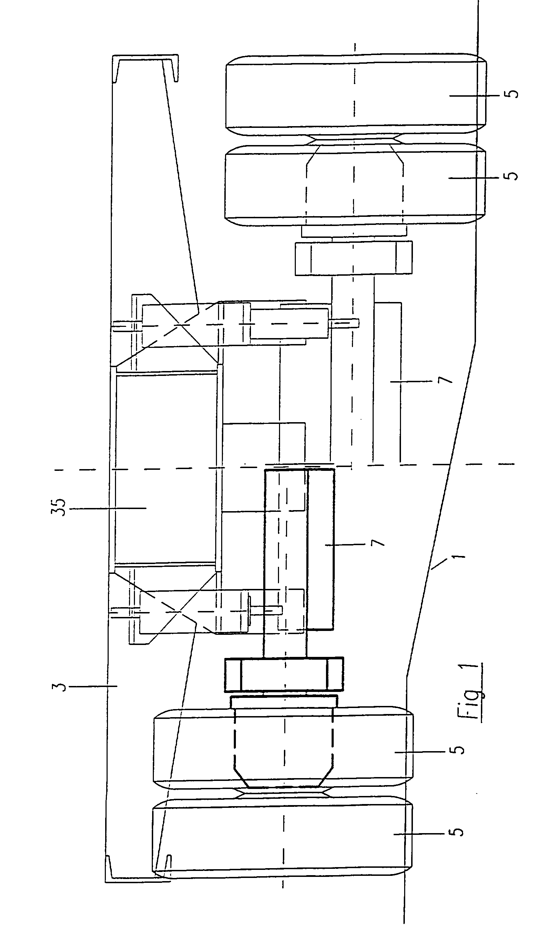

L'invention permet donc de concilier une série d'impératifs aussi bien liés à la manoeuvrabilité de la remorque et à son comportement sur une route en dénivelé transversal. En d'autres mots, le montage en demi-essieux tel qu'indiqué est compatible avec une commande de direction. Même une position opposée extrême des demi-essieux (voir figure 1) n'entraîne aucune torsion dans le corps d'essieu 18. Il s'en suit que la tenue de route du véhicule est améliorée, notamment dans les virages.

Le montage en porte-à-faux des demi-essieux 7 permet également le passage de la barre bi-articulée 32 depuis sa liaison par le pivot 31 à la barre de liaison 29 et extérieurement vers le levier de direction 33.

Il convient de noter qu'il existe un espacement libre 35 (voir figure 1) formant un caisson ménagé dans le châssis porteur qui peut être gardé ouvert vers le haut ou entretoisé ou encore obturé si l'on souhaite, par une tôle de couverture ou par un plattelage.

C'est donc la conception géométrique des éléments constitutifs qui permet leur présence simultanée sur une remorque et la possibilité d'exercer en combinaison leurs fonctions, sans entraîner de perturbation à leur fonctionnement individuel.

Bien que l'on ait décrit une forme d'exécution préférée de l'invention, il doit être bien entendu que des modifications peuvent être apportées au principe général tel que décrit.

A titre d'illustration, le dispositif est applicable à un train de roues en ligne ne comportant que deux roues ou plus de deux paires de roues.

De manière classique, pour des remorques équipées de plusieurs trains de roues en ligne à l'arrière et éventuellement plusieurs trains de roues en ligne à l'avant, la barre de liaison 29 peut comporter, à hauteur de chaque train de roues en ligne, chaque fois un triangle de direction tel que le triangle 30 représenté.

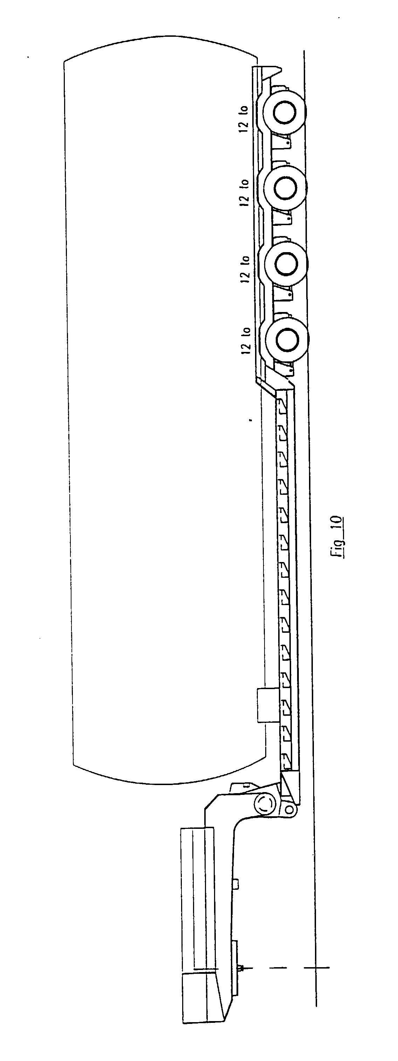

L'espacement 35 décrit peut convenir pour servir d'appui à une charge du type citerne tel que représenté aux figures 9 et 10 par exemple.

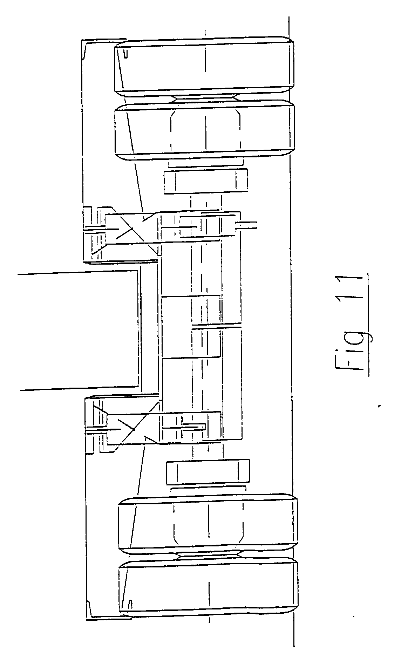

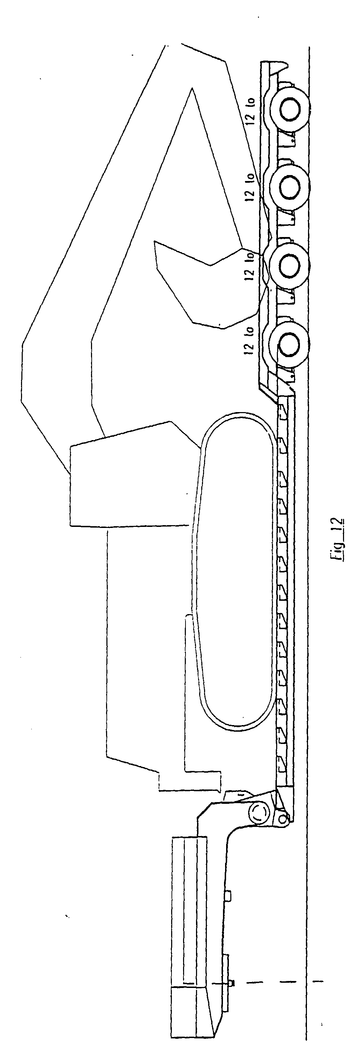

Cet espacement 35 peut être mis à profit comme l'indique les figures 11 et 12 lors du transport d'un engin de génie civil, en l'occurence une pelleteuse ou une excavatrice. Dans ce cas, l'encombrement en hauteur du bras de la pelleteuse implique que pour passer sous un pont, il convient non seulement que la plate-forme sur laquelle repose l'engin soit aussi basse que possible mais qu'également, le bras puisse être abaissé au maximum. L'espacement libre 35 permet ainsi de recevoir la pelle et d'abaisser d'autant le bras de la pelleteuse. En outre le centre de gravité de la charge est ainsi abaissé et la stabilité du véhicule améliorée.

## Revendications

1. Remorque surbaissée ou extra-surbaissée destinée à être accrochée à tout type de véhicule tracteur, notamment par un timon, comportant un espacement (35) longitudinal dans la zone des essieux, et comportant un système directionnel (29-33) des roues (5), caractérisée en ce qu'elle comporte, pour une ou plusieurs lignes de roues (5), un montage constitué de deux demi-essieux en porte-à-faux (7), qui est équipé de manière classique d'une suspension hydraulique ou pneumatique (13) et qui est combiné avec ledit système directionnel (29-33) des roues (5) constitué par des barres bi-articulées (32) entraînées par au moins une barre de direction (29) commandée par vérin et agissant sur un levier de direction (33) des roues, les supports (11) respectifs de chaque demi-essieu en porte-à-faux (7) étant disposés de manière à permettre le passage des éléments de direction.

2. Remorque selon la revendication 1, caractérisée en ce qu'elle comporte un montage de demi-essieux à fusée.

3. Remorque selon la revendication 1 caractérisée en ce que le montage de chaque demi-essieu est constitué par un support (11) qui est fixé sur un chassis de la remorque et qui se prolonge par un bras de suspension (12) supportant le corps d'essieu (18).

4. Remorque selon la revendication 3 caractérisée en ce que des vérins de suspension (13) fonctionnant indépendamment sont prévus pour chacun des demi-essieux.

## Patentansprüche

1. Tiefliegender oder extra-tiefliegender Anhänger, der dazu bestimmt ist, insbesondere mittels einer Deichsel an jede Art von Zugfahrzeug angehängt zu werden, umfassend einen Längszwischenraum (35) in der Zone der Achsen, und umfassend ein Lenksystem (29-33) für die Räder (5), dadurch gekennzeichnet, daß er für eine oder mehrere Reihen von Rädern (5) eine Anordnung umfaßt, die aus zwei fliegend gelagerten Halbachsen (7) besteht, die auf herkömmliche Weise mit einer hydraulischen oder pneumatischen Aufhängung (13) ausgerüstet ist, und die mit dem Lenksystem (29-33) für die Räder (5) kombiniert ist, das aus Zweigelenkstäben (32) besteht, die durch mindestens eine Lenkstange (29) angetrieben werden, die durch einen Hubzylinder gesteuert wird und auf einen Lenkhebel (33) für die Räder wirkt, wobei die Stützen (11) jeder fliegend gelagerten Halbachse (7) so angeordnet sind, daß sie den Durchgang der Lenkelemente ermöglichen.

2. Anhänger gemäß Anspruch 1, dadurch gekennzeichnet, daß er eine Anordnung aus Halbachsen mit Achsschenkel umfaßt.

3. Anhänger gemäß Anspruch 1, dadurch gekennzeichnet, daß die Anordnung aus jeder Halbachse aus einer Stütze (11) besteht, die auf einem Chassis des Anhängers befestigt ist, und die durch einen Aufhängungsarm (12) verlängert ist, der den Achskörper (18) trägt.

4. Anhänger gemäß Anspruch 3, dadurch gekennzeichnet, daß unabhängig voneinander arbeitende Aufhängungszylinder (13) für jede der Halbachsen vorgesehen sind.

## Claims

1. Dropped or extra-dropped trailer adapted to be tied up with any type of towing vehicle, more particularly through a pole, with a longitudinal spacing (35) in the area of the axles, and including a directional system (29-33) of the wheels (5), characterized in that it has, for one or several wheel lines (5), an arrangement made of two overhanging half-axles (7), which is conventionally provided with an hydraulic or pneumatic suspension (13) and is associated with said directional system (29-33) of the wheels (5) being made with bi-articulated rods (32) driven by at least one jack-actuated direction rod (29) and acting onto a direction lever (33) of the wheels, the respective supports (11) of each overhanging half-axle (7) being positioned so as to allow the crossing of the direction elements.

2. Trailer according to claim 1, characterized in that it comprises an arrangement of rocket half-axles.

3. Trailer according to claim 1, characterized in that the arrangement of each half-axle is made with a support (11) secured to a trailer frame and extended with a suspension arm (12) bearing the axle body (18).

4. Trailer according to claim 3, characterized in that independently functioning suspension jacks (13) are provided for each of the half-axles.
